# EUROPEAN PATENT SPECIFICATION

(11) **EP 3 456 168 B1**
(45) Date of publication and mention of the grant of the patent: **11.11.2020**
(21) Application number: 18194463.8
(22) Date of filing: 14.09.2018
(51) Int. Cl.: A01D 17/10, A01D 45/00

(54) **UPROOTING SYSTEM**
ENTWURZELUNGSSYSTEM
SYSTÈME DE DÉRACINEMENT

(30) Priority: 18.09.2017 NL 2019563
(43) Date of publication of application: 20.03.2019
(73) Proprietor: Basrijs B.V., 4891 SZ Rijsbergen (NL)
(72) Inventor: Bastiaansen, Cornelis Theodorus Marie, 4891 SZ Rijsbergen (NL)
(74) Representative: Grootscholten, Johannes A.M.

(56) References cited:
- EP-A1- 2 218 318
- DE-A1- 19 828 813
- FR-A1- 2 569 941
- FR-A1- 2 628 080
- US-A- 1 592 962

## Description

The present disclosure relates to an uprooting system for uprooting shrubbery. Such systems are known from for example NL - 93 00 109 and/or EP - 2 218 318 in the name of the same applicant as the present disclosure.

The aforementioned prior art systems comprise respectively a transporter with shrubbery engaging elements like pins, fingers or the like, and a combination of a transporter without shrubbery engaging elements and an overhead conveyor having the shrubbery engaging elements. The shrubbery engaging elements serve to ensure better upfeed of the uprooted shrubbery. However, regardless of whether the transporter or the conveyor has the shrubbery engaging elements, a problem arose in practice that shrubbery were being dragged along for far too long a distance, causing congestion of these prior art systems.

According to the present disclosure, a new uprooting system is provided to exhibit the features of a mobile frame; an essentially loop-shaped transporter supported by the frame and defining an upward oriented path for carrying upward the detached bushes and/or plants from the uprooting means; and a reciprocally moveable conveyor arranged at least partially within the transporter along a length of at most the upward oriented path and having shrubbery engaging elements extending aside of and/or through the transporter along the length of at most the upward oriented path to engage the shrubbery moving there along. This allows the transporter to have pins or teeth when moving along the path upward, which are then retracted to avoid congestion.

The shrubbery engaging elements serve to engage the shrubbery, as it is promoted upward along the path on the transporter. The shrubbery engaging elements are then made to retract behind the transporter, out of engagement with the shrubbery, allowing the transporter to deposit the uprooted and upward transported shrubbery more accurately and without or at least less danger of congestion of the system. From the field of harvesting, similar features are known, for example from FR-2628080 exhibiting plate-like shrubbery engaging elements on a conveyor in the interior of a transporter and from FR-2569941 exhibiting an open belt transporter and a fingers or pins carrying conveyor in the interior of confines defined by the open belt transporter, wherein the present disclosure is distinguished over these prior publications with respect to at least features in the characterising portion of the appended independent claim. In FR-2628080, some degree of coupling between the transporter and the conveyor is achieved in that the shrubbery engaging elements on the conveyor extend through the transporter along the length of at most the upward oriented path. Also, according to FR-2628080 separate bar transporters embodying the transporter and the conveyor have side belts and overlying transverse bars thereon, wherein these transverse bars extend in a plane over the side belts. However, both shrubbery engaging elements and interlocking transverse bars allow a lot of play and can not allow a single drive on one of the transporter and the conveyor to drive both.

Objectives of the present disclosure comprise a simpler drive of the transporter and conveyor, possibly in unison and together, for example - but not limited to - using a single driven wheel connected to a drive and engaging both the transporter and the conveyor, without considerable problems regarding synchronisation, which could cause - in the configurations of the prior publications, and in particular FR-2628080 - the shrubbery engaging elements to abut and/or engage parts and components of the transporter, such as transverse bars in a bar transporter, whereby the transporter and the conveyor could be kept apart from each other along the length of at most the upward oriented path, causing the shrubbery engaging elements to lose the function thereof, and/or damage to the transporter and/or conveyor and/or to a driving motor.

According to the present disclosure, the uprooting system exhibits the features that the transporter and the conveyor are coupled along the length of at most the upward oriented path, and at least one of the transporter and the conveyor comprises a side belt with articulated recesses, and the transporter and the conveyor both comprise at least one side belt with articulated recesses and transverse bars attached to the side belt in the recesses, wherein one of the transporter and the conveyor is wider than the other, and the transverse bars thereof define coupling elements which are accommodated in the recesses of the other of the transporter and the conveyor along the length of at most the upward oriented path. This allows a sufficiently sturdy interlock of the conveyor and the transporter along the length of at most the upward oriented path.

Since the transporter and the conveyor are coupled along the length of at most the upward oriented path separate or common drive, synchronisation and the like are facilitated.

Further, the feature that at least one of the transporter and the conveyor comprises the side belt with articulated recesses, and the both the transporter and the conveyor comprise at least one side belt with articulated recesses and transverse bars attached to the side belt in the recesses, wherein one of the transporter and the conveyor is wider than the other , and the transverse bars thereof define coupling elements which are accommodated in the recesses of the other of the transporter and the conveyor along the length of at most the upward oriented path, an elegant embodiment is achieved, which is inventive in its simplicity, since it allows the automatic and synchronised coupling between the transporter and the conveyor to be realised.

The uprooting system exhibits the feature that one of the transporter and the conveyor is wider than the other. Thereby transverse couplings are possible, relative to the width of the transporter and the conveyor and the transportation direction thereof, enabling a flat and easily driven assembly of the transporter and the conveyor. With side belt(s) and inter related widths, the coupling elements extend sideways relative to the upward oriented path, to be accommodated in the recesses of the less wide of the transporter and the conveyor, along the length of at most the upward oriented path.

Many preferred embodiments are disclosed in the below embodiment description, drafted in conjunction with the appended drawing, or defined in the appended dependent claims.

In an exemplary embodiment, the uprooting system exhibits the features that the shrubbery engaging elements comprise fingers or pins arranged at a distance from each other on the conveyor in an outward orientation relative to the loop-shape of the transporter. This allows the shrubbery on the transporter to be dragged along with the transporter with the aid of the shrubbery engaging elements, extending from the transporter as if arranged thereon or fixed thereto. When the shrubbery engaging elements are retracted behind the transporter, the risk of congestion is eliminated.

In an additional or alternative exemplary embodiment, the uprooting system exhibits the features of a shrubbery transmission, bridging an initial height between the ground and a lowest portion of the transporter. This allows shrubs to be safely transferred from the ground, possibly undercut using a knife or other uprooting device or where the system supports on the ground via wheels, to the transporter. In such an embodiment the shrubbery transmission may comprise bars or tines extending between the ground and the transporter. Thus a guide is formed, from which the shrubs are taken by the shrubbery engaging elements that then preferably act as part of the transporter to drag the shrubs from the transmission and along with the transporter. Additionally or alternatively, in an embodiment having the shrubbery transmission, the shrubbery transmission may further comprise a shaker. Additionally and/or alternatively, any one or more than one of the transporter and the conveyor may comprise a shaker. This allows dirt and debris to be beaten from the roots and fall through the transmission back to the ground.

In an additional or alternative exemplary embodiment, the uprooting system exhibits the features that the transporter itself, without the shrubbery engaging elements extending there along or there through, defines an essentially flat surface transverse to the upward orientation of the path, without any one of protrusions, fingers and/or pins. This allows simplification of the transporter, relative to either of the above referenced prior art publications.

In an additional or alternative exemplary embodiment, the uprooting system exhibits the features that the conveyor extends to a lower height than the transporter. With the conveyor turning back down from a lower point than the transporter, it is evident the shrubbery engaging elements are retracted from a position protruding along or through the transporter.

In an additional or alternative exemplary embodiment, the uprooting system exhibits the features of a synchronization between the transporter and the conveyor. Although preferred and not considered crucial, such synchronisation may contribute to simplification of the drives of the transporter and conveyor, to an extent allowing a single motor to be deployed. Alternatively for a single drive motor, in such an embodiment, the synchronization may comprise separate motors associated with respectively the transporter and the conveyor, which are driven in synchronized manner, for instance using control signals, or are mutually connected by means of synchronizing coupling means.

In an additional or alternative exemplary embodiment, the uprooting system exhibits the features that the conveyor has a configuration similar to the transporter. This enhances mutual compatibility.

In an additional or alternative exemplary embodiment, the uprooting system exhibits the features that at least one of the transporter and the conveyor comprises at least one of a sieve conveyor and a bar chain. This allows dirt and debris being discharged, instead of having to be transported away with the shrubbery and having to be disposed of.

In an additional or alternative exemplary embodiment, the uprooting system exhibits the features that the transporter defines a more upward inclined portion and in the upward direction consecutively a less upward inclined portion, with a transition there between. Such a turn in orientation along the path allow a steeper portion of the path to be embodied in conjunction with the shrubbery engaging elements of the conveyor, while in the more sloping and horizontal part of the path, a flat transporter without the shrubbery engaging elements of the conveyor protruding through or along the transporter may suffice to promote the shrubbery to a point of discharge.

In such an embodiment, the conveyor may begin separation from the transporter and retraction of the shrubbery engaging elements at the transition. In this manner a well defined transition in the slope of the transporter is associated with a separation point of the transporter and the conveyor, resulting in a potential simplification, for example using a single roll wheel from where the slopes of the transporter and the conveyor diverge, at a lower slope than up to the transition point.

In an additional or alternative exemplary embodiment, the uprooting system exhibits the features that the conveyor begins to extend parallel to the transporter with the shrubbery engaging elements protruding there along or there through, at the latest at a lower portion of the path in a round going movement of the transporter. In this manner the shrubbery engaging elements are available and extend from the transporter from a position along the path where the shrubbery needs to be engaged thereby.

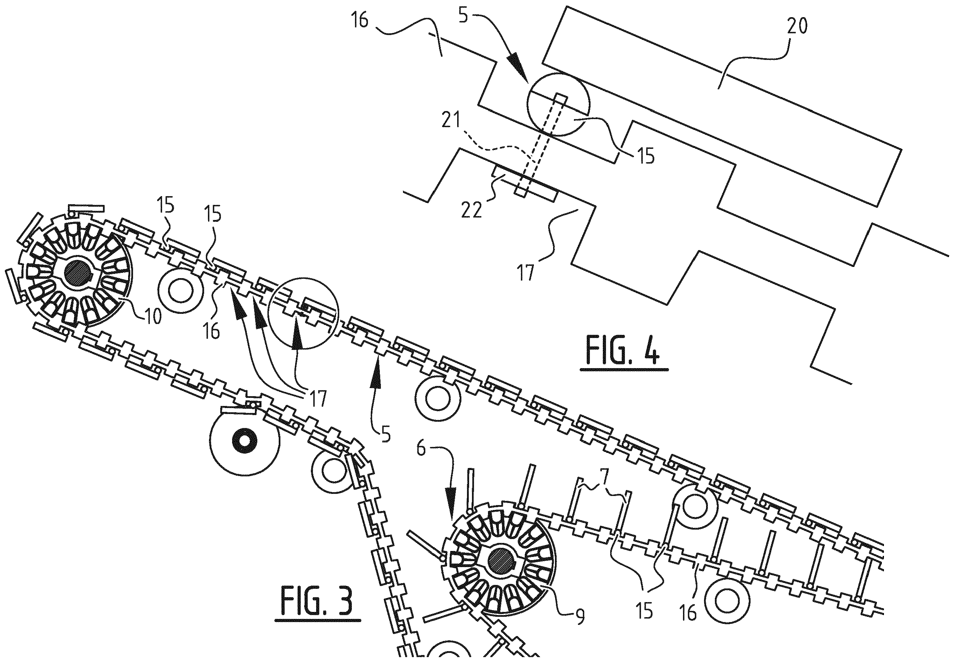

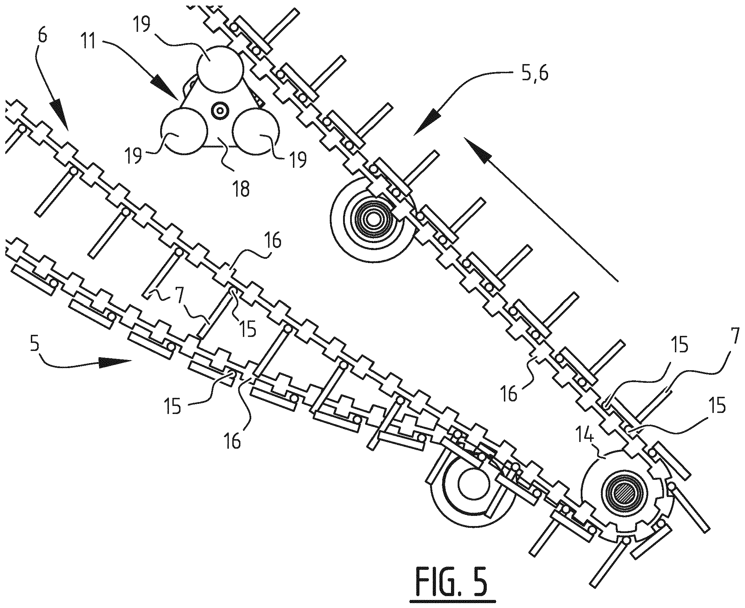

In an additional or alternative exemplary embodiment, the uprooting system exhibits the features that the transporter and the conveyor have an at least approximately equal length and the conveyor is arranged in a meandering fashion within the spatial confines of the loop-shaped transporter. In this manner, even without the distinguishing features of the single appended independent claim and consequently an invention in its own right, easier synchronisation may be achieved. However, more importantly, the transporter and the conveyor may have substantially different lengths and pitch defining basic elements, wherein pitches of the basic elements of the transporter and of the conveyor are to correspond in the sense that the transporter and the conveyor need to run into each other (figure 5) and be separated (figure 3) fluently without hiccups or bumps, which could affect the drive, such as an electromotor or a hydraulic motor or the like, wherever the drive acts on either or both of the transporter 5 and the conveyor 6 to move these in a reciprocating and in some embodiments even round going movement. The meandering configuration further allows for more accurate synchronisation, even if the transporter and conveyor differ substantially in length. Moreover, the above features also differentiate over the prior art, entirely separate from the distinguishing features of the appended independent claim, to allow for the transporter and the conveyor to be mounted around common guiding means, whereby a reduction of a size of a stock of necessary spare parts for the device may be achieved.

Following the above reference to embodiments of the present disclosure in terms, expressions and features defined in the appended claims, below follows an embodiment description with reference to the also appended drawing of preferred embodiments, to which the present disclosure is by no means limited and provided merely to disclose also preferred and non-limiting aspects of the invention in the present disclosure to a sufficient degree, and in which:
figure 1 shows a schematic side view of an embodiment of the uprooting system according to the present disclosure;
figure 2 shows an exploded view of the embodiment of figure 1 with integrated components shown in stacked fashion;
figure 3 shows top portions of paths followed by respectively the transporter and the conveyor of the embodiment of figure 1;
figure 4 shows an assembly of the transporter and the conveyor in side view; and
figure 5 shows bottom portions of paths followed by respectively the transporter and the conveyor of the embodiment of figure 1.

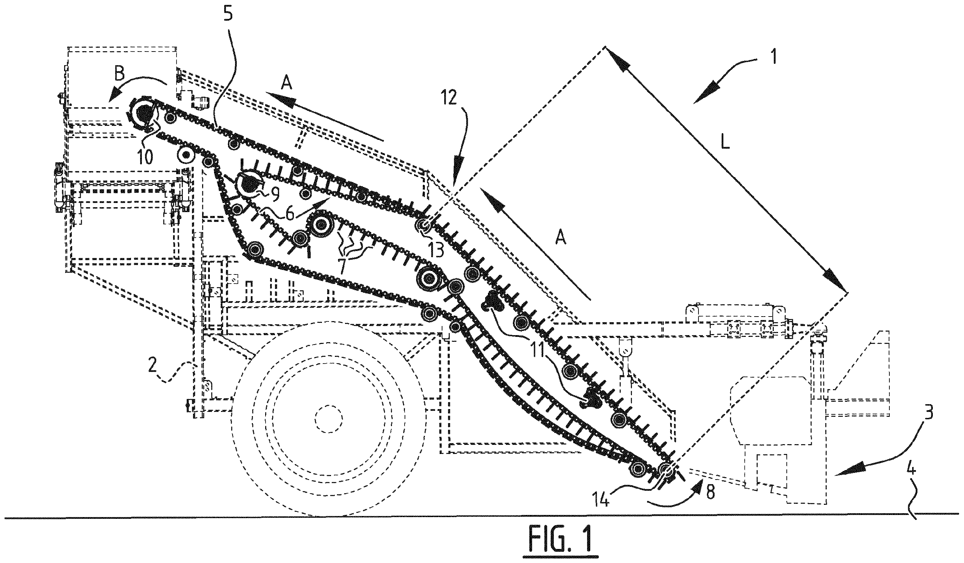

In one particular embodiment of an uprooting system 1 according to the present disclosure, shown in figures 1 - 5, it exhibits a mobile frame 2; an optional uprooting device 3 at the front of the frame 2 for uprooting the shrubbery from a ground 4; an essentially loop-shaped transporter 5 supported by the frame 2 and defining an upward oriented path along arrows A for carrying upward the uprooted shrubbery (i.e. detached bushes and/or plants) from the optional uprooting device 3; and a reciprocally moveable conveyor 6 arranged at least partially within the transporter 5 along a length L of at most the upward oriented path A and having shrubbery engaging elements 7 extending aside of and/or through the transporter 5 along the length L of at most the upward oriented path A to engage the shrubbery moving there along.

The optional uprooting device 3 may comprise a plough or knife. Additionally or alternatively, the uprooting system may comprise running wheels in the moving direction in front of a lower end of the transporter 5 and conveyor 6. The lower end of the transporter 5 and the conveyor 6 may undercut shrubbery in the ground 4, in stead of or in addition to the uprooting device 3. Running wheels can prevent, with or without the uprooting device, the transporter 5 and conveyor 6 from digging into the ground and getting stuck. The uprooting device 3 may or may not then be omitted. Further, the lower end of the system may comprise side cutters, for example wheel cutters, at the transversal sides of the uprooting system. This may serve the purpose of cutting ties between mother plants and branch plants. For example in the case of strawberry plants, cutting such ties prevents the branch plants from being violently dragged out of the ground from considerable transversal distance, when parent plants are uprooted, if the ties were not cut.

The shrubbery engaging elements 7 of the conveyor 6 serve to engage the shrubbery, as it is promoted upward along the length L of the path on the transporter 5. The shrubbery engaging elements 7 are then, from transition point 12, made to retract behind the transporter 5, out of engagement with the shrubbery, allowing the transporter 5 to deposit the uprooted and upward transported shrubbery more accurately at any desired discharge and without or at least with less danger of congestion of the system 1, than if the shrubbery engaging elements 7 are on the transporter 5 around the circumference thereof.

In the shown exemplary embodiment, the uprooting system 1 exhibits the features that the shrubbery engaging elements 7 comprise fingers or pins arranged at a distance from each other on the conveyor 6 in an outward orientation relative to the loop-shape of the transporter 5. This allows the shrubbery on the transporter 5 to be dragged along with the transporter 5 with the aid of the shrubbery engaging elements 7, extending from the transporter as if arranged thereon or fixed thereto, but only in the part of at most the length L of the path, defined by the transporter 5 for promoting the shrubbery. When the shrubbery engaging elements are retracted behind the transporter 5 in a round going movement of the transporter 5, indicated at arrow B, the risk of congestion is eliminated.

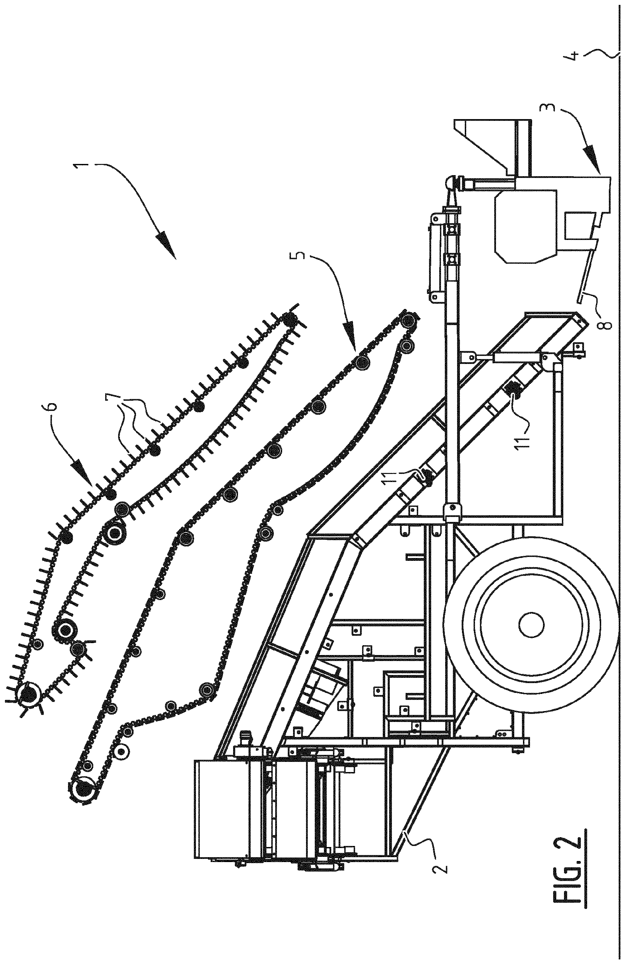

The shown uprooting system 1 further exhibits a shrubbery transmission 8, bridging an initial height between the ground at the uprooting device 3 and a lowest portion of the transporter 5. This allows shrubs to be safely transferred from ground at the optional knife or other uprooting device 3, to the transporter 5. In this embodiment, the shrubbery transmission 8 may comprise bars or tines extending between the ground at the optional uprooting device 3 and the transporter 5. Thus a guide is formed, from which the shrubs are taken by the shrubbery engaging elements 7 that then preferably act as part of the transporter 5 to drag the shrubs from the transmission 8 and along with the transporter 5. The shrubbery transmission may further comprise a shaker (not shown). Any one or more than one of the transporter 5 and the conveyor 6 may likewise comprise a shaker 11 (schematically indicated in figures 1, 2 and in more detail in figure 5). Such shakers 11 may be arranged on the frame 2 and act on the any one or more than one of the transporter, the conveyor and the shrubbery transmission. This allows dirt and debris to be beaten from the roots and fall through the transmission 8 back to the ground 4. To this end, the shaker 11 may comprise driven rotary body 18 with cams or disks 19 (here: three cams 19) thereon, which intermittently bump against the transporter 5 and/or the conveyor 6, when the rotary body 18 rotates in the direction of arrow

The uprooting system 1 further exhibits the features that the transporter 5 itself, without the shrubbery engaging elements 7 extending there along or there through, defines an essentially flat surface transverse to the upward orientation of the path A, without any one of protrusions, fingers and/or pins.

The uprooting system 1 according to the shown embodiment exhibits the features that the conveyor 6 extends to a lower height than the transporter 5. This is clear from the lower height of conveyor's turning wheel 9 than the turning wheel 10 of the transporter 5. With the conveyor 6 turning back down from a lower point than the transporter 5, it is evident the shrubbery engaging elements 7 are retracted from a position protruding along or through the transporter 5. However, in the shown embodiment, this retraction is initiated at a bend in the slope of the transporter 5, as indicated in Figure 3.

Synchronization between the transporter 5 and the conveyor 6 is provided in any one of a number of possible embodiments. Such synchronisation may contribute to simplification of the drives of the transporter 5 and conveyor 6, to an extent allowing a single motor to be deployed. Alternatively for a single drive motor, the synchronization may comprise separate motors associated with respectively the transporter 5 and the conveyor 6, which are driven in synchronized manner, for instance using control signals, or are mutually connected by means of synchronizing coupling means.

The conveyor 6 has a configuration similar to the transporter 5. Both may be formed by bar chains.

The transporter and the conveyor both comprise at least a bar chain of interlinked parallel bars 15, extending for example transverse of the transport direction of arrows A. Such bars may be linked by one or more than one belt 16 extending along a trajectory of the transporter 5 and/or of the conveyor 6. Preferably such (a) belt(s) 16 is a side belt at or near the ends of bars 15 of the bar chain, where coupling of the transporter 5 and the conveyor 6 is preferably realised to minimise thickness at turning wheel 14 and eliminate throughput differences between the transporter 5 and the conveyor 6 or stretching of an outer of the transporter 5 and/or conveyor 6 as a consequence of stacked rotational at such turning wheels, to maintain desired synchronisation.

The transporter 5 defines a more upward inclined portion in a lower lying portion, and, in the upward direction, consecutively a less upward inclined portion in an upper portion, with a transition 12 there between. Such a turn in orientation along the path allow a steeper portion of the path to be embodied in conjunction with the shrubbery engaging elements 7 of the conveyor 6, while in the more sloping, and thus more horizontal part of the path a flat transporter 5 without the shrubbery engaging elements 7 of the conveyor 6 protruding through or along the transporter 5 is anticipated to suffice to promote the shrubbery to a point of discharge, at a top of the transporter 5. The conveyor 5 begins separation - in the round going movement of the transporter 5 and the conveyor 6 - from the transporter 5 and retraction of the shrubbery engaging elements 7 at the transition 12. In this manner a well defined transition 12 in the slope of the transporter is associated with a separation point of the transporter 5 and the conveyor 6. To define the transition 12, a single roll wheel 13 is employed, from where the slopes of the transporter 5 and of the conveyor 6 diverge. The transporter 5 and the conveyor 6 diverge, but in the shown embodiment both progress upward above the transition at a lower slope than up to the transition 12.

As shown in figure 5, the conveyor and the transporter 5 rejoin at a lower turning wheel 14 in the vicinity of the transmission 8. From the turning wheel 14, the transporter 5 and the conveyor 6 begin to extend in parallel and abutting relation, and are driven in the direction of arrows A along the path. At least in the lower lying portion of the path, in this embodiment up to the transition 12, the shrubbery engaging elements protrude along or through the transporter 5, at the latest at a lower portion of the path in a round going movement of the transporter 5, defined by the turning wheel 14. In this manner the shrubbery engaging elements 7 are available for dragging shrubbery along from the bottom portion of the system 1, and extend from the transporter from a position along the path where the shrubbery needs to be engaged first thereby.

The transporter 5 and the conveyor 6 are coupled along the length of at most the upward oriented path, i.e. from turning wheel 14 up to transition 12, and start to come loose from one another at the transition 12.

The transporter 5 and the conveyor 6 both comprise a side belt 16 with articulated recesses 17, and the other of the transporter 5 and the conveyor 6 comprises coupling elements which are accommodated in the recesses along the length of at most the upward oriented path, and in particular at the turning wheel 14. This is an elegant embodiment, inventive in its simplicity, since it allows the automatic and synchronised coupling between the transporter and the conveyor to be realised. As shown in figure 4, bars 15 of the bar chain forming the transporter 5 (and the conveyor 6 may be similarly configured) are attached to the side belt 16 by mounting pins 21 using mounting disks 22, at the articulated recesses 17. Further, a plurality of cover pins 20 may be attached to each of the cross bars 15 to extend in the direction of movement of the bars 15, to define, with the bars 15, a more grid-like configuration and allow passage back to the ground 4 practically only of soil, not shrubbery, such as plants and/or bushes.

The transporter 5 is wider than the conveyor 6. Thereby transverse couplings are possible, relative to the width of the transporter 5 and the conveyor 6 and the transportation direction thereof, enabling a flat and easily driven assembly of the transporter 5 and the conveyor 6, even at the turning wheel, without a thick stack on such turning wheels and without differences in throughput speeds between the transporter 5 and the conveyor 6, resulting in potential loss of synchronicity. In an embodiment with side belt(s) and inter related widths, the coupling elements may extend sideways relative to the upward oriented path, to be accommodated in the recesses 17 along the length of at most the upward oriented path, i.e. between turning wheel 14 and transition 12. This enables parts or extensions of the bars 15 of the one of the transporter 5 and conveyor 6 to be accommodated in the recesses 17 of the other.

The transporter 5 and the conveyor 6 have an at least approximately equal length and the conveyor 6 is arranged in a meandering fashion within the spatial confines of the loop-shaped transporter 5.

Following the above embodiment description and ahead of the following claims, it is again emphasized here that the scope of protection is defined in the appended independent claim, and is not to be construed as limited to any feature in particular of the appended dependent claims or of the above embodiment description under reference to the appended drawing, and that even obvious equivalents of claimed features may - in some countries - fall inside the scope of protection. For instance the uprooting device 3 is optional in the sense that it may be omitted. Alternatively of in addition, the system may have support, for instance support wheels, in front of a lower end of the system. Alternatively or in addition, the system mat have side cutters, for instance wheel cutters, at transversal sides of the lower end on the transporter 5 and conveyor 6.

Further down-pressure may be applied on shrubbery moving upwards over the transporter 5, using rotatable wheels or potentially even a round moving counter belt, as known in principle and in isolation from EP - 2 218 318. Also, the transporter 5 and the conveyor 6 may have different lengths and be constituted from pitch defining basic elements, wherein pitches of the basic elements of the transporter 5 and of the conveyor 6 correspond for fluent combining and separation, as shown in figures 3 (separation) and 5 (combining).

## Claims

1. Uprooting system for uprooting shrubbery from a ground, comprising:
- a mobile frame (2);
- an essentially loop-shaped transporter (5) supported by the frame and defining an upward oriented path (A) for carrying upward uprooted shrubbery, such as detached bushes and/or plants; and
- a reciprocally moveable conveyor (6) arranged at least partially within the transporter along a length of at most the upward oriented path and having shrubbery engaging elements (7) extending aside of and/or through the transporter along the length of at most the upward oriented path to engage the shrubbery moving there along,
wherein the transporter and the conveyor are coupled along the length of at most the upward oriented path, and at least one of the transporter and the conveyor comprises a side belt with articulated recesses,
**CHARACTERISED IN THAT**
the transporter and the conveyor both comprise at least one side belt (16) with articulated recesses and transverse bars (15) attached to the side belt in the recesses, wherein one of the transporter and the conveyor is wider than the other, and the transverse bars thereof define coupling elements which are accommodated in the recesses of the other of the transporter and the conveyor along the length of at most the upward oriented path.

2. Uprooting system as claimed in claims 1, wherein the coupling elements (15) extend sideways relative to the upward oriented path (A).

3. Uprooting system as claimed in any of the preceding claims, wherein the transporter (5) and the conveyor (6) have an at least approximately equal length and the conveyor (6) is arranged in a meandering fashion within the spatial confines of the loop-shaped transporter (5).

4. Uprooting system as claimed in any of the preceding claims, wherein the shrubbery engaging elements (7) comprise fingers or pins arranged at a distance from each other on the conveyor (6) in an outward orientation relative to the loop-shape of the transporter (5).

5. Uprooting system as claimed in any of the preceding claims, comprising a shrubbery transmission bridging an initial height between the ground and a lowest portion of the transporter (5).

6. Uprooting system as claimed in claim 5, wherein the shrubbery transmission comprises bars or tines extending between the ground and the transporter (5).

7. Uprooting system as claimed in any of the preceding claims, wherein a synchronization is provided between the transporter (5) and the conveyor (6) and comprises separate motors associated with respectively the transporter and the conveyor, which are driven in synchronized manner, for instance using control signals, or are mutually connected by means of synchronizing coupling means.

8. Uprooting system as claimed in any of the preceding claims, wherein the conveyor (6) has a configuration of the side belt (16) with articulated recesses and transverse bars (15), which is at least similar to the configuration of the transporter (5).

9. Uprooting system as claimed in any of the preceding claims, wherein at least one of the transporter (5) and the conveyor (6) comprises at least one of a sieve conveyor and a bar chain.

10. Uprooting system as claimed in any of the preceding claims, wherein the transporter (5) defines a more upward inclined portion and in the upward direction consecutively a less upward inclined portion, with a transition (12) there between.

11. Uprooting system as claimed in claim 10, wherein conveyor (6) begins separation from the transporter (5) and retraction of the shrubbery engaging elements (7) at the transition (12).

12. Uprooting system as claimed in any of the preceding claims, wherein the conveyor (6) begins to extend parallel to the transporter (5) with the shrubbery engaging elements protruding there along or there through, at the latest at a lower portion of the path in a round going movement of the transporter (5).

13. Uprooting system as claimed in any of the preceding claims, wherein the transporter (5) and the conveyor (6) have different lengths and pitch defining basic elements, wherein pitches of the basic elements of the transporter and of the conveyor correspond for fluent combining and separation.

14. Uprooting system as claimed in any of the preceding claims, further comprising a press above or over the transporter, configured for pressing down shrubbery on the transporter.

## Patentansprüche

1. Entwurzelungssystem zum Entwurzeln von Sträuchern aus einem Boden, das aufweist:
- einen beweglichen Rahmen (2);
- einen im Wesentlichen schlaufenförmigen Transporter (5), der von dem Rahmen gehalten wird und einen nach oben ausgerichteten Pfad (A) zum Transportieren der entwurzelten Sträucher, wie herausgezogene Büsche und/oder Pflanzen, nach oben definiert, und
- ein hin- und her bewegbares Förderband (6), das wenigstens teilweise in dem Transporter entlang einer Länge von einem Großteil des nach oben ausgerichteten Pfads angeordnet ist und Straucheingriffselemente (7) hat, die zur Seite und/oder durch den Transporter entlang der Länge des Großteils des nach oben ausgerichteten Pfads verlaufen, um in die Sträucher mit der Bewegung daran entlang einzugreifen,
wobei der Transporter und das Förderband miteinander entlang der Länge des Großteils des nach oben ausgerichteten Pfads gekoppelt sind und wenigstens eines von dem Transporter und dem Förderband ein Seitenband mit schwenkbaren Aussparungen aufweist,
**dadurch gekennzeichnet, dass**
der Transporter und das Förderband beide wenigstens ein Seitenband (16) mit schwenkbaren Aussparungen und an dem Seitenband in den Aussparungen angebrachte Querstangen (15) aufweisen, wobei einer von dem Transporter und dem Förderband breiter ist als das andere, und die Querstangen davon Kopplungselemente definieren, die in den Aussparungen von dem anderen von dem Transporter und dem Förderband entlang der Länge von dem Großteil des nach oben ausgerichteten Pfads aufgenommen sind.

2. Entwurzelungssystem nach Anspruch 1, wobei die Kopplungselemente (15) bezüglich des nach oben ausgerichteten Pfads (A) zur Seite verlaufen.

3. Entwurzelungssystem nach einem der vorhergehenden Ansprüche, wobei der Transporter (5) und das Förderband (6) eine wenigstens annähernd gleiche Länge haben und das Förderband (6) in einer mäandernden Weise in den räumlichen Begrenzungen des schlaufenförmigen Transporters (5) angeordnet ist.

4. Entwurzelungssystem nach einem der vorhergehenden Ansprüche, wobei die Straucheingriffselemente (7) Finger oder Stifte aufweisen, die in einem Abstand voneinander am Förderband (6) in einer Richtung nach außen bezüglich der Schlaufenform des Transporters (5) angeordnet sind.

5. Entwurzelungssystem nach einem der vorhergehenden Ansprüche,
das eine Strauchübertragung aufweist, die eine Anfangshöhe zwischen dem Boden und einer untersten Position des Transporters (5) überbrückt.

6. Entwurzelungssystem nach Anspruch 5, wobei die Strauchübertragung Stangen oder Zinken aufweist, die zwischen dem Boden und dem Transporter (5) verlaufen.

7. Entwurzelungssystem nach einem der vorhergehenden Ansprüche, wobei eine Synchronisierung zwischen dem Transporter (5) und dem Förderband (6) vorgesehen ist und getrennte Motoren aufweist, die jeweils mit dem Transporter und dem Förderband verbunden sind, die in einer synchronisierten Weise angetrieben werden, zum Beispiel mittels Steuersignale, oder die mittels einer Synchronisierungskopplungseinrichtung miteinander verbunden sind.

8. Entwurzelungssystem nach einem der vorhergehenden Ansprüche, wobei das Förderband (6) eine Gestaltung des Seitenbands (16) mit schwenkbaren Aussparungen und Querstangen (15) hat, die wenigstens ähnlich zur Gestaltung des Transporters (5) ist.

9. Entwurzelungssystem nach einem der vorhergehenden Ansprüche, wobei wenigstens eines von dem Transporter (5) und dem Förderband (6) wenigstens eines von einem Siebförderband und einer Stabkette aufweist.

10. Entwurzelungssystem nach einem der vorhergehenden Ansprüche, wobei der Transporter (5) einen weiter nach oben geneigten Bereich und in der Richtung nach oben folgend einen weniger nach oben geneigten Bereich mit einem Übergang (12) dazwischen definiert.

11. Entwurzelungssystem nach Anspruch 10, wobei das Förderband (6) eine Trennung vom Transporter (5) und ein Zurückziehen der Straucheingriffselemente (7) an dem Übergang (12) beginnt.

12. Entwurzelungssystem nach einem der vorhergehenden Ansprüche, wobei das Förderband (6) spätestens an einem unteren Bereich des Pfads in einer runden Verlaufsbewegung des Transporters (5) beginnt, parallel zum Transporter (5) zu verlaufen, wobei die Straucheingriffselemente hier entlang oder hierdurch hervorstehen.

13. Entwurzelungssystem nach einem der vorhergehenden Ansprüche, wobei der Transporter (5) und das Förderband (6) unterschiedliche Längen und Steigungen definierende Basiselemente haben, wobei die Steigungen der Basiselemente des Transporters und des Förderbands einander zur reibungslosen Kombination und Trennung entsprechen.

14. Entwurzelungssystem nach einem der vorhergehenden Ansprüche,
das weiterhin eine Presse über dem oder quer über den Transporter aufweist, die eingerichtet ist, um die Sträucher auf den Transporter herunterzupressen.

## Revendications

1. Dispositif de déracinement destiné à déraciner des arbustes du sol, comprenant :
un châssis mobile (2) ;
un dispositif de transport sensiblement en forme de boucle (5) supporté par le châssis et définissant un trajet orienté vers le haut (A) afin de transporter vers le haut des arbustes déracinés, tels que des buissons et/ou plantes séparées ; et
un convoyeur pouvant se déplacer avec un mouvement alternatif (6) agencé au moins partiellement à l'intérieur du dispositif de transport le long d'un segment d'au plus égal au trajet orienté vers le haut et comportant des éléments de couplage d'arbuste (7) s'étendant à côté du dispositif de transport et/ou à travers celui-ci, le long du segment d'au plus égal au trajet orienté vers le haut afin d'entraîner les arbustes se déplaçant le long de celui-ci,
dans lequel le dispositif de transport et le convoyeur sont couplés le long du segment au plus égal au trajet orienté vers le haut, et au moins l'un du dispositif de transport et du convoyeur comprend une bande latérale avec des cavités articulées,
**caractérisé en ce que**
le dispositif de transport et le convoyeur comprennent tous deux au moins une bande latérale (16) avec des cavités articulées et des barres transversales (15) fixées sur la bande latérale dans les cavités, dans lequel l'un du dispositif de transport et du convoyeur est plus large que l'autre, et ses barres transversales définissent les éléments de couplage qui sont reçus dans les cavités de l'autre du dispositif de transport et du convoyeur le long du segment au plus égal au trajet orienté vers le haut.

2. Dispositif de déracinement selon la revendication 1, dans lequel les éléments de couplage (15) s'étendent latéralement par rapport au trajet orienté vers le haut (A).

3. Dispositif de déracinement selon l'une quelconque des revendications précédentes, dans lequel le dispositif de transport (5) et le convoyeur (6) présentent une longueur au moins sensiblement égale et le convoyeur (6) est agencé de façon à former des méandres à l'intérieur de la limite spatiale du dispositif de transport en forme de boucle (5).

4. Dispositif de déracinement selon l'une quelconque des revendications précédentes, dans lequel les éléments de couplage d'arbuste (7) comprennent des doigts ou broches agencées à une certaine distance l'un de l'autre sur le convoyeur (6) suivant une orientation vers l'extérieur par rapport à la forme en boucle du dispositif de transport (5).

5. Dispositif de déracinement selon l'une quelconque des revendications précédentes, comprenant un élément de transmission d'arbuste assurant la jonction sur une hauteur initiale entre le sol et une partie inférieure du dispositif de transport (5).

6. Dispositif de déracinement selon la revendication 5, dans lequel l'élément de transmission d'arbuste comprend des barres ou poutrelles s'étendant entre le sol et le dispositif de transport (5).

7. Dispositif de déracinement selon l'une quelconque des revendications précédentes, dans lequel une synchronisation est assurée entre le dispositif de transport (5) et le convoyeur (6) et comprend des moteurs séparés associés respectivement au dispositif de transport et au convoyeur, lesquels sont entraînés d'une manière synchronisée, par exemple, en utilisant des signaux de commande, ou sont raccordés mutuellement au moyen de la synchronisation de moyen de couplage.

8. Dispositif de déracinement selon l'une quelconque des revendications précédentes, dans lequel le convoyeur (6) présente une configuration de bande latérale (16) avec des cavités articulées et des barres transversales (15), qui est au moins similaire à la configuration du dispositif de transport (5).

9. Dispositif de déracinement selon l'une quelconque des revendications précédentes, dans lequel au moins l'un du dispositif de transport (5) et du convoyeur (6) comprend au moins l'un d'un convoyeur à tamis et d'une chaîne à barre.

10. Dispositif de déracinement selon l'une quelconque des revendications précédentes, dans lequel le dispositif de transport (5) définit une partie plus inclinée vers le haut et consécutivement, dans la direction ascendante, une partie moins inclinée vers le haut, avec une transition (12) entre les deux.

11. Dispositif de déracinement selon la revendication 10, dans lequel le convoyeur (6) commence la séparation par rapport au dispositif de transport (5) et la rétraction des éléments de couplage d'arbuste (7) au niveau de la transition (12).

12. Dispositif de déracinement selon l'une quelconque des revendications précédentes, dans lequel le convoyeur (6) commence à s'étendre parallèlement au dispositif de transport (5), les éléments de couplage d'arbuste s'étendant le long ou à travers celui-ci, au plus loin, au niveau d'une partie inférieure du trajet, suivant un mouvement arrondi du dispositif de transport (5).

13. Dispositif de déracinement selon l'une quelconque des revendications précédentes, dans lequel le dispositif de transport (5) et le convoyeur (6) présentent des longueurs et pas différents définissant des éléments de base, dans lequel les pas des éléments de base du dispositif de transport et du convoyeur correspondent à des couplages et séparation aisées.

14. Dispositif de déracinement selon l'une quelconque des revendications précédentes, comprenant, en outre, une presse au-dessus ou sur le dispositif de transport, configurée de manière à compresser les arbustes sur le dispositif de transport.
